Europäisches Patentamt

(19) European Patent Office

Office européen des brevets

(11) Veröffentlichungsnummer: **0 063 259**
**A1**

(12) **EUROPÄISCHE PATENTANMELDUNG**

(21) Anmeldenummer: 82102549.1

(22) Anmeldetag: 26.03.82

(51) Int. Cl.³: **A 01 D 50/00**

(30) Priorität: 22.04.81 DE 3116071

(43) Veröffentlichungstag der Anmeldung:
27.10.82 Patentblatt 82/43

(84) Benannte Vertragsstaaten:
AT BE CH DE FR GB IT LI NL

(71) Anmelder: Maschinenfabrik Bermatingen GmbH & Co.
Kesselbachstrasse 4
D-7775 Bermatingen(DE)

(72) Erfinder: Fleck, Alfons
Kesselbachstrasse 6
D-7775 Bermatingen(DE)

(74) Vertreter: Engelhardt, Guido, Dipl.-Ing.
Ehlersstrasse 17 Postfach 1350
D-7990 Friedrichshafen(DE)

(54) Schlegelmulchgerät.

(57) Bei einem Schlegelmulchgerät (1) mit einer um eine horizontale Achse antreibbaren, mit Schlegelmessern (6) bestückten Messerwalze (5) ist diese auf der Rückseite des Gerätes (1) mit einer angepaßten Abdeckung (11) versehen und über der Messerwalze (5) ist ein sich an die Abdeckung (11) anschließender Förderschacht (12) angeordnet, in dessen Einmündung am Geräterahmen (2) befestigte Schlagleisten (7) angebracht sind, die mit den Schlegelmessern (6) zusammenwirken.

Durch diese Ausgestaltung wird am Boden (A) liegendes Gut mittels der Schlegelmesser (6) aufgenommen, mit Hilfe der Schlagleisten (7) zerkleinert und unmittelbar danach in den Förderschacht (12) abgeschleudert. Das zerkleinerte Gut kann auf diese Weise leicht gesammelt und einer Verwertung zugeführt werden, so daß in einem Arbeitsgang der Boden nicht nur bearbeitet, sondern auch gesäubert wird.

FIG. 1

Maschinenfabrik
Bermatingen GmbH & Co.

7775 Bermatingen

Schlegelmulchgerät

Die Erfindung bezieht sich auf ein Schlegelmulchgerät, das
an ein Zugfahrzeug anhängbar ist und eine in einem Rahmen
gehaltene Messerwalze aufweist, die um eine horizontal gerichtete Achse antreibbar und mit mit seitlichem Abstand
zueinander angeordneten Schlegelmessern bestückt ist, zwischen denen im Rahmen befestigte Schlagleisten eingreifen.

Schlegelmulchgeräte dieser Art werden mit großem Erfolg
im Obst- und Weinbau, in der Forstwirtschaft sowie bei der
Landschaftspflege eingesetzt, um insbesondere zwischen Baum-
oder Rebstockreihen den Boden zu bearbeiten und/oder um
Schnittholz oder anderen Unrat zu zerkleinern. Die Messerwalzen sind bei den bekannten Ausgestaltungen im oberen Bereich vollständig abgedeckt und die Schlagleisten sind derart angeordnet, daß das von den Schlegelmessern aufgenommene
und mit Hilfe der zwischen diese hineinragenden Schlagleisten zerkleinerte Gut hinter der Messerwalze zum Verrotten
auf dem Boden abgelegt wird.

Zerhackte, beispielsweise zwischen Weinstöcken liegende Holzstücke wirken aber nicht nur unschön, sondern durch diese

./.

können auch die Reifen des das Mulchgerät ziehenden Fahrzeuges bei einem weiteren Arbeitsgang beschädigt werden. Vor allem aber ist von Nachteil, daß sich in dem der Verrottung überlassenen Gut Pilze bilden können und somit ständig eine große Gefahr besteht, daß die Kulturen von einer Pilzkrankheit befallen werden. Außerdem bleibt mitunter wertvolles Holz ungenutzt liegen und wird nicht verwertet.

Es ist daher Aufgabe der Erfindung, das Schlegelmulchgerät der vorgenannten Gattung in der Weise weiterzubilden, daß das zerkleinerte Gut von diesem sofort sauber aufgenommen wird und demnach leicht verwertet werden kann. Der dazu erforderliche Bauaufwand soll klein gehalten werden, auch soll das Gerät, um dessen Handhabung nicht zu beeinträchtigen, gedrungen in seiner Ausgestaltung sein.

Gemäß der Erfindung wird dies dadurch erreicht, daß die Messerwalze auf der Rückseite des Gerätes mit einer dieser angepaßten Abdeckung versehen ist, daß über der Messerwalze ein vorzugsweise sich über deren Breite erstreckender Förderschacht für das zerkleinerte Gut angeordnet ist, an dessen rückseitiger Wand sich die Abdeckung anschließt, und daß die Schlagleisten im Bereich der Einmündung des Förderschachtes angeordnet sind.

Durch diese Ausgestaltung wird am Boden liegendes Gut mittels der Schlegelmesser aufgenommen, mit Hilfe der Schlagleisten zerkleinert und unmittelbar danach in den Förderschacht abgeschleudert. Das zerkleinerte Gut kann auf diese Weise leicht gesammelt und einer Verwertung zugeführt werden, so daß in einem Arbeitsgang der Boden nicht nur bearbeitet, sondern auch gesäubert werden kann. Außerdem wird der Gefahr entgegengewirkt, daß durch eine Verrottung

./.

Krankheiten hervorgerufen werden. Der wirtschaftliche Aufwand für die zusätzlichen Baumaßnahmen, um diese zu bewerkstelligen, ist gering und in kurzer Zeit durch die Verwertung des aufgesammelten Gutes zu amortisieren, auch wird durch diese die Handhabung des Gerätes nicht beeinträchtigt.

Zweckmäßig ist es hierbei, die Schlagleisten etwa zur Mitte der Messerwalze gerichtet an der vorderen Wand des Förderschachtes anzubringen. Dadurch ist sichergestellt, daß das zerkleinerte Gut, das im Bereich der Schlagleisten etwa tangential von der Messerwalze abgeschleudert wird, in Richtung des Förderschachtes transportiert wird.

Um eine besonders gedrungene Bauform zu erreichen, ist es angebracht, den Förderschacht in Fahrtrichtung nach hinten geneigt verlaufend anzuordnen und diesen an seinem oberen Ende mit einer nach unten offenen Auslaßöffnung zu versehen, wobei zweckmäßigerweise dem Förderschacht ein Sammelbehälter zugeordnet wird, der unterhalb der Auslaßöffnung angeordnet und über ein Hebelgestänge höhenverstellbar an dem Förderschacht und/oder dem Rahmen angestützt ist. Hierbei ist es vorteilhaft, den Sammelbehälter mit mittels einer am Förderschacht und/oder dem Rahmen abgestützten Servoeinrichtung um eine horizontale Achse verschwenkbar gelagerten Hebeln zu verbinden und vorzugsweise an der dem Förderschacht zugekehrten Seite eine Verschlußklappe vorzusehen, die an ihrem oberen Ende schwenkbar an dem Sammelbehälter befestigt ist. Außerdem sollte die dem Förderkanal zugekehrte Seitenwand des Sammelbehälters etwa parallel zu der rückwärtigen Wand des Förderkanals verlaufen.

Nach einer Weiterbildung ist es ferner zweckmäßig, den Sammelbehälter mit einer vorzugsweise in dessen unteren Bereich

./.

angeordneten Preßvorrichtung zur Paketierung des aufgesammelten Gutes zu versehen. Dadurch ist es möglich, während das Gerät im Einsatz ist, das zerkleinerte Gut zu
Paketen, die leicht weiterzutransportieren und zu ver -
werten sind, zusammenzupressen.

Die Preßvorrichtung kann in einfacher Ausgestaltung aus
einem zum Befüllen mit dem Sammelbehälter verbundenen
mit einer Auslaßöffnung versehenen Preßraum und mit einem
in diesen einführbaren, mittels einer Servoeinrichtung betätigbaren Schieber gebildet werden, wobei die Auslaßöffnung des Preßraumes durch eine in Vorschubrichtung des
Schiebers gegen Federkraft aufschwenkbare Klappe verschlossen ist, die somit, sobald ein entsprechender Preßdruck vorherrscht, selbttätig geöffnet und ein Preßling ausgestoßen
wird.

Nach einer andersartigen Ausgestaltung ist es aber auch
möglich, zum Pressen des in dem Sammelbehälter eingelegten
Gutes einen an dem Förderschacht oder dem Rahmen abgestützten
Schieber vorzusehen, gegen den der mit einer Einführöffnung
für diesen ausgestattete Sammelbehälter durch Verschwenken
um die horizontale Achse preßbar ist.

Vorteilhaft ist es ferner, den Förderschacht mit einem
Fördergebläse zu versehen, das in der Vorderwand des Förderschachtes oberhalb der Messerwalzen eingesetzt sein
sollte. Dadurch kann die Förderung von leichteren Gütern,
wie Laub, Gras, Papier und dgl. unterstützt werden.

Nach einer andersartigen Ausgestaltung ist es aber auch
möglich, in den Förderschacht ein sich vorzugsweise über
dessen Breite erstreckendes mit Förderelementen, wie Zinken
oder Winkelschienen bestücktes, antreibbares Förderband

./.

einzusetzen, das trieblich mit der Messerwalze verbunden
sein kann. Auf diese Weise können auch schwere Gegenstände
wie Steine oder ähnliches mit dem Gerät aufgenommen und
einem Sammelbehälter zugeführt werden.

Damit die Schlegelmesser evtl. dennoch liegengebliebenes
Gut erneut aufnehmen können, ist es des weiteren zweckmäßig, in Fahrtrichtung hinter der Messerwelle, vorzugsweise in Fahrtrichtung geneigt angeordnete und nachgiebig
gehaltene, zwischen die Schlagmesser eingreifende Zinken
vorzusehen.

Des weiteren kann, um den Verwendungsbereich zu erweitern,
der Messerwalze eine mit Aufnahmewerkzeugen bestückte antreibbare Aufnahmewalze od.dgl. zugeordnet werden, zwischen
deren Werkzeugen die Schlegelmesser der Messerwalze zur
Übernahme des aufgenommenen Gutes eingreifen. Die Aufnahmewalze sollte hierbei unterhalb der Messerwalze vorzugsweise
gegenüber dieser nach vorn versetzt angeordnet und trieblich
mit der Messerwalze verbunden sein.

In der Zeichnung sind einige Ausführungsbeispiele des gemäß
der Erfindung ausgebildeten Schlegelmulchgerätes dargestellt
und nachfolgend im einzelnen erläutert. Hierbei zeigen, jeweils in Seitenansicht und schematischer Darstellung:

Fig. 1    das mit einer Abdeckung der Messerwalze
          und einem über dieser angeordneten Förder-
          schacht sowie einem hochschwenkbaren Sammel-
          behälter ausgestattete Gerät,

Fig. 2    das Gerät nach Fig. 1 mit einer in den
          Sammelbehälter integrierten Preßvorrichtung,

./.

Fig. 3      das Gerät nach Fig. 1 mit einer andersartig ausgestalteten Vorrichtung zum Pressen des aufgesammelten Gutes,

Fig. 4      ein Schlegelmulchgerät, dessen Messerwalze eine Aufnahmewalze zugeordnet ist    und

Fig. 5      ein Schlegelmulchgerät mit einem in dessen Förderschacht eingesetztem Transportband.

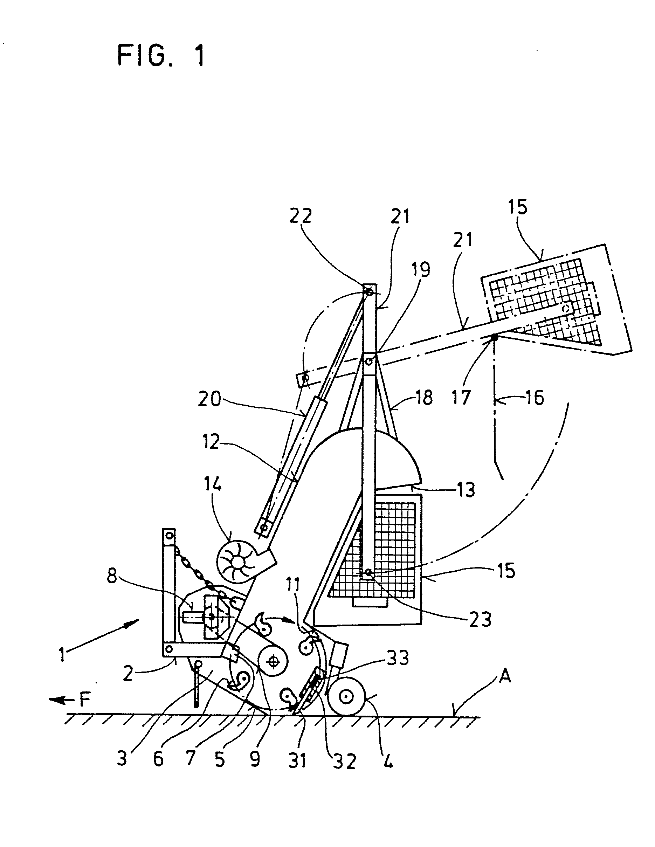

Das in den Fig. 1, 2 und 3 dargestellte und jeweils mit 1 bezeichnete Schlegelmulchgerät besteht im wesentlichen aus einem an ein Zugfahrzeug anhängbaren Rahmen 2, der mittels einer Laufwalze 4 am Boden A abgestützt ist, und einer in den Seitenteilen 3 des Rahmens 2 drehbar gelagerten Messerwalze 5, die mit seitlichem Abstand zueinander angeordneten Schlegelmessern 6 bestückt ist. Der Antrieb der Messerwalze 5 erfolgt von der nicht gezeigten Zapfwelle des Zugfahrzeuges über ein Winkelgetriebe 8 und einen Keilriementrieb 9. Vor der Messerwalze 5 am Boden A liegendes Gut, das zerkleinert werden soll, wird von den Schlegelmessern 6 ausgenommen und durch diese zwischen Schlagleisten 7, die ebenfalls am Rahmen 2 befestigt sind und zwischen die Schlegelmesser 6 hineinragen, hindurchgedrückt. Dabei wird das aufgenommene Gut etwa auf eine dem Abstand zwischen zweier Schlagleisten 7 entsprechenden Länge zerhächselt.

Damit das zerkleinerte Gut, insbesondere zerhacktes Holz, nicht hinter der Messerwalze 5 am Boden liegenbleibt, ist diese mit einer angepaßten Abdeckung 11 versehen und über dieser ist ein Förderschacht 12 angeordnet, in den das zerkleinerte Gut, da die Schlagleisten 7 im Bereich der Einmündung des Förderschachtes 12 angeordnet sind, abgeschleudert wird. Und unterhalb der am Ende des Förderschachtes 12 vorgesehenen, nach unten offenen Auslaßöffnung 13

./.

ist ein Sammelbehälter 15 angebracht, in den das zerkleinerte Gut sofort aufgesammelt wird. Um den Transport leichterer Güter, wie Papier, Laub, Gras und dgl. gegebenenfalls unterstützen zu können, ist in die vordere Seitenwand des in Fahrtrichtung F nach hinten geneigten Förderschachtes 12 ein Ventilator 15 eingesetzt.

Damit evtl. dennoch hinter der Messerwalze 5 liegengebliebenes Gut aufgenommen wird, sind an der Abdeckung 11 zwischen die Schlegelmesser 6 eingreifende Zinken 31 angebracht, die in Fahrtrichtung F geneigt angeordnet sind. Die Zinken 31 sind hierbei jeweils i- einer Hülse 32 eingesetzt und entgegen der Kraft von Federn 33 verschiebbar geführt, so daß diese als Rechen wirken und liegengebliebenes Gut erneut den Schlegelmessern 6 zuführen.

Zum Entleeren des Sammelbehälters 15 ist dieser höhenverstellbar angeordnet. Dazu dienen zwei seitlich an dem Sammelbehälter 15 mittels Zapfen 23 gelenkig angebrachte Hebel 21, die gemeinsam um eine Achse 19, die durch ein auf dem Förderkanal 12 abgestützten Lagerbock 18 gebildet ist, schwenkbar sind. Und zur Erzeugung der Schwenkbewegung ist eine Servoeinrichtung 2o, beispielsweise ein pneumatisch oder hydraulisch betätigbarer Zylinder, vorgesehen, die an einer die Hebel 21 verbindenden weiteren Achse 22 angelenkt ist. Außerdem weist der Sammelbehälter 15 eine Verschlußklappe 16 auf, die an ihrem oberen Ende mittels eines Gelenkbolzens 17 an diesem befestigt ist. Durch Hochschwenken des Sammelbehälters 15, wie dies in Fig. 1 strichpunktiert eingezeichnet ist, kann das in diesem gesammelte zerkleinerte Gut somit auf einfache Weise, sobald sich je nach Aufhängung dessen Verschlußklappe 17 selbsttätig öffnet, beispielsweise auf die Ladefläche eines Lastkraftwagens entleert werden.

./.

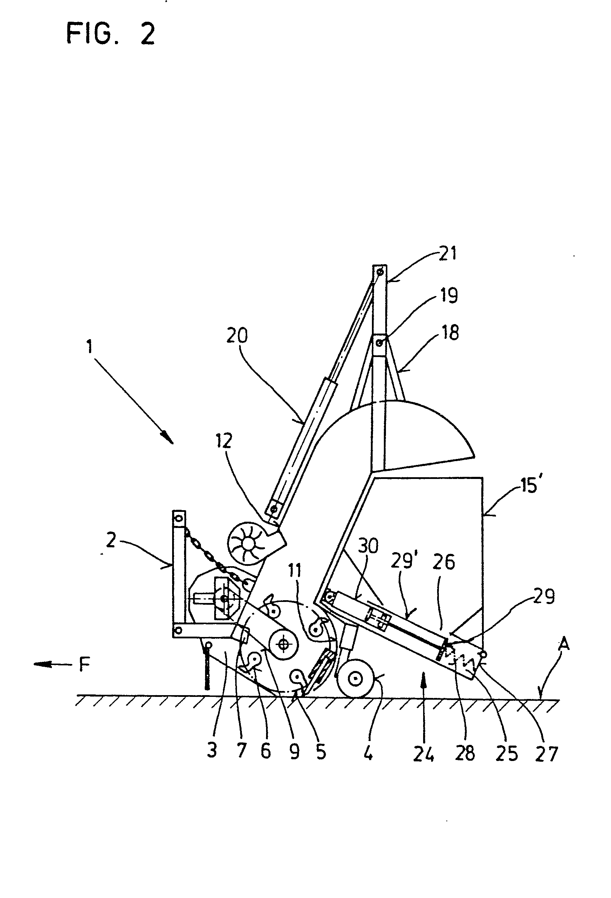

Gemäß der in Fig. 2 gezeigten Weiterbildung ist es aber auch möglich, das in dem Sammelbehälter 15' befindliche Gut, während das Gerät 1 im Arbeitseinsatz sich befindet, zu Paketen zusammenzupressen. Um dies zu bewerkstelligen, ist im unteren Bereich des Sammelbehälters 15' eine Preßvorrichtung 24 vorgesehen, die aus einem Preßraum 25 und einem mittels einer Servoeinrichtung 3o in diesen einführ- baren Schieber 29 besteht.

Während eines Preßvorganges wird die Auslaßöffnung 26 des Preßraumes 25, über die dieser mit dem Aufnahmebehälter 15' zum Befüllen verbunden ist, durch eine an dem Schieber 29 angebrachte Platte 29' verschlossen, so daß kein Gut hinter diesen gelangen kann. Sobald in dem Preßraum 25 ein vorbestimmbarer Preßdruck herrscht, wird durch den Schieber 29 das paketierte Gut selbsttätig ausgestoßen, da eine den Preßraum 25 verschließende Klappe 27 entgegen der Kraft von seitlich des Behälters 15' angeordneten Federn 28 geöffnet werden kann.

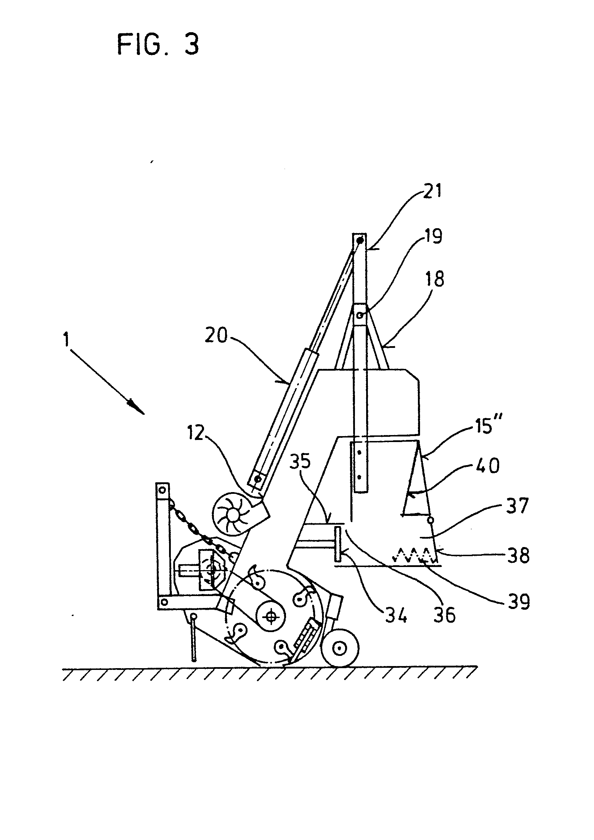

Bei der Ausgestaltung nach Fig. 3 ist zum Pressen des in dem Sammelbehälter 15'' befindlichen Gutes ein an dem Förderkanal 12 angebrachter Schieber 34 vorgesehen, der durch eine Platte 35 abgedeckt ist. Zum Pressen wird hierbei der mit einer Öffnung 36 zum Einführen des Schiebers 34 ausgestattete Aufnahmebehälter 15'' mittels der Servoeinrichtung 2o um die horizontale Achse 19 geschwenkt, so daß dadurch das in dem durch eine Zwischenwand 4o gebildeten und durch eine schwenkbare Klappe 38 verschlossene Preßraum 37 befindliche Gut zusammengepreßt wird. Ist eine entsprechende Komprimierung erreicht, wird die Klappe 38 entgegen der Kraft von seitlich angeordneten Federn 39 geöffnet und der Preßling wird ausgestoßen.

./.

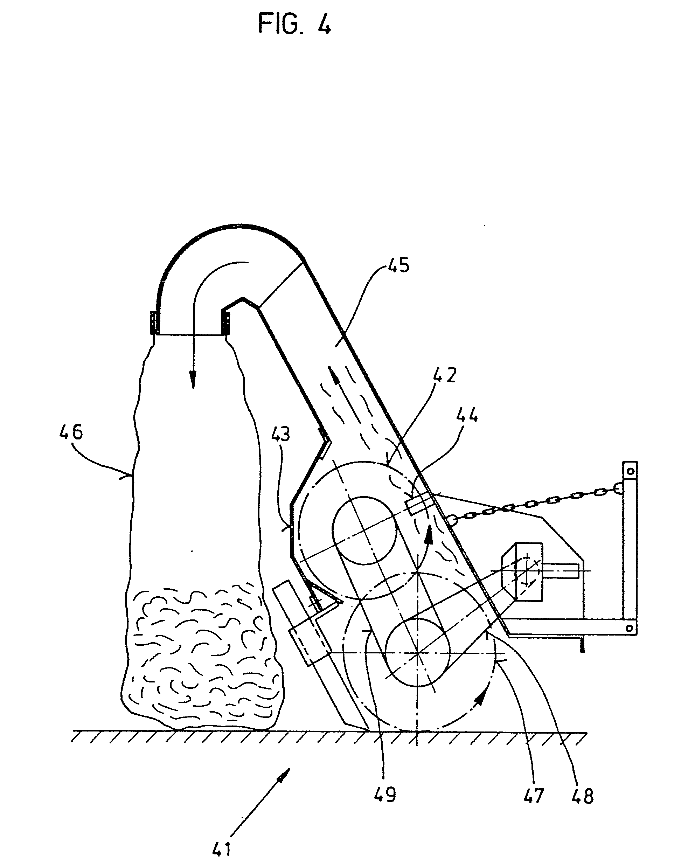

Das in Fig. 4 dargestellte Schlegelmulchgerät 41, das im
Prinzip in gleicher Weise ausgebildet ist, wie das Gerät
nach den Figuren 1 bis 3, ist zusätzlich mit einer der
Messerwalze 42 zugeordneten Aufnahmewalze 47 - diese
Walzen sind jeweils als strichpunktierte Kreise dargestellt - versehen, die unterhalb der Messerwalze 42 in
Fahrtrichtung gegenüber dieser nach vorn versetzt angeordnet ist. Über Riementriebe 48 und 49 sind die Aufnahmewalze  47 und die Messerwalze 42 trieblich miteinander
verbunden.

Das von den Werkzeugen der Aufnahmewalze 47 aufgenommene
Gut wird von den in diese eingreifenden Schlegelmessern
der Messerwalze 42 übernommen, mit Hilfe der Schlagleisten
44 zerkleinert und in den Förderschacht 45 , da die Messerwalze 42 durch eine Abdeckung 43 im übrigen Bereich abgedeckt ist, abgeschleudert und in einem an dessen Ende angebrachten Sack 46 aufgesammelt. Mittels dieser Ausgestaltung
ist es auch möglich, schwere Gegenstände aufzusammeln.

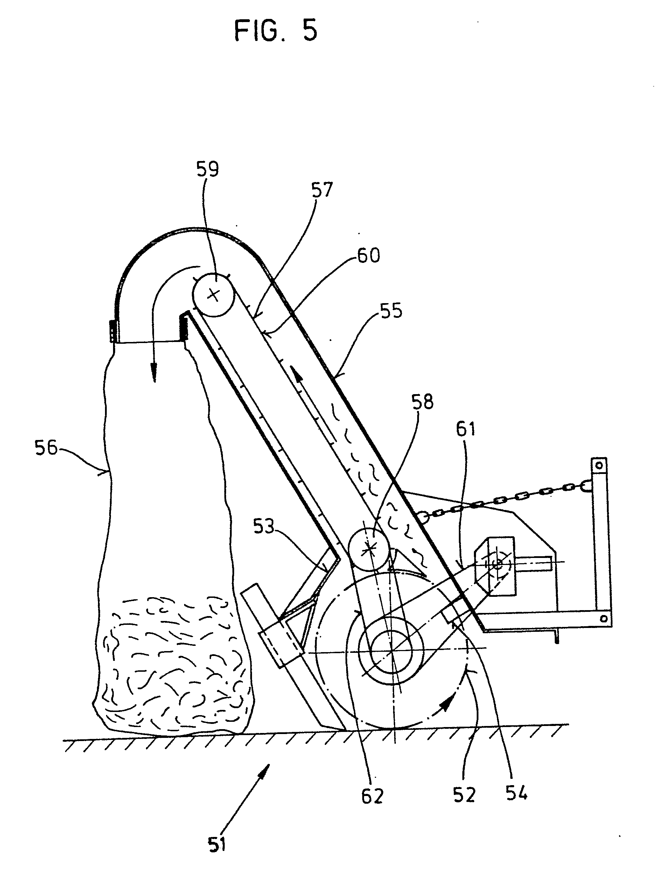

Bei dem Schlegelmulchgerät 51 nach Fig. 5 ist in den Förderschacht 55 ein Transportband 57 eingesetzt, das über Walzen 58 und 59 geführt und mit Förderelementen 6o, wie beispielsweise federnde Zinken oder Winkelschienen, bestückt
ist. Mittels Riementrieben 61 und 62 sind die Messerwalze 52
und das Transportband 57 antreibbar.

Das durch die mit einer Abdeckung 53 versehene Messerwalze
52 aufgenommene mit Hilfe der Schlagleisten 54 zerkleinerte
Gut wird von dem Transportband 57 übernommen und in einen
an den Förderschacht 55 eingehängten Sack 56 als Sammelbehältnis transportiert.

A 4789 e-s
22. April 1981

Maschinenfabrik
Bermatingen GmbH & Co.
7775 Bermatingen
_____

P a t e n t a n s p r ü c h e :
_____

1. Schlegelmulchgerät, das an ein Zugfahrzeug anhängbar ist
und eine in einem Rahmen gehaltene Messerwalze aufweist,
die um eine horizontal gerichtete Achse antreibbar und
mit mit seitlichem Abstand zueinander angeordneten
Schlegelmessern bestückt ist, zwischen denen im Rahmen
befestigte Schlagleisten eingreifen,

d a d u r c h   g e k e n n z e i c h n e t ,

daß die Messerwalze (5; 42; 52) auf der Rückseite des
Gerätes (1; 41; 51) mit einer dieser angepaßten Abdeckung
(11; 43; 53) versehen ist, daß über der Messerwalze
(5; 42; 52) ein vorzugsweise sich über deren Breite erstreckender Förderschacht (12; 45; 55) für das zerkleinerte Gut angeordnet ist, an dessen rückseitige Wand
sich die Abdeckung (11; 43; 53) anschließt, und daß die

./.

Schlagleisten (7; 44; 54) im Bereich der Einmündung
des Förderschachtes (12; 45; 55) angeordnet sind.

2. Schlegelmulchgerät nach Anspruch 1,

   d a d u r c h   g e k e n n z e i c h n e t ,

   daß die Schlagleisten (7; 44; 54) etwa zur Mitte der
   Messerwalze (5; 42; 52) gerichtet an der vorderen Wand
   des Förderschachtes (12; 45; 55) angebracht sind.

3. Schlegelmulchgerät nach Anspruch 1 oder 2,

   d a d u r c h   g e k e n n z e i c h n e t ,

   daß der Förderschacht (12; 45; 55) in Fahrtrichtung (F)
   nach hinten geneigt verlaufend angeordnet und an seinem
   oberen Ende mit einer nach unten offenen Auslaßöffnung
   (13) versehen ist.

4. Schlegelmulchgerät nach einem oder mehreren der
   Ansprüche 1 bis 3,

   d a d u r c h   g e k e n n z e i c h n e t ,

   daß dem Förderschacht (12) ein Sammelbehälter (15)
   zugeordnet ist, der unterhalb der Auslaßöffnung (13)
   angeordnet und über ein Hebelgestänge (21) höhenverstellbar an dem Förderschacht (12) und/oder dem Rahmen (2)
   abgestützt ist.

5. Schlegelmulchgerät nach Anspruch 4,

   d a d u r c h   g e k e n n z e i c h n e t ,

daß der Sammelbehälter (15) mit mittels einer am Förderschacht (12) und/oder dem Rahmen (2) abgestützten Servoeinrichtung (2o) um eine horizontale Achse (19) verschwenkbar gelagerten Hebeln (21) verbunden ist und vorzugsweise an der dem Förderschacht (12) zugekehrten Seite
eine Verschlußklappe (16) aufweist, die an ihrem oberen
Ende schwenkbar an dem Sammelbehälter (15) befestigt ist.

6. Schlegelmulchgerät nach Anspruch 4 oder 5,

   d a d u r c h   g e k e n n z e i c h n e t ,

   daß die dem Förderkanal (12) zugekehrte Seitenwand des
   Sammelbehälters (15) etwa parallel zu der rückwärtigen
   Wand des Förderkanals (12) verläuft.

7. Schlegelmulchgerät nach einem oder mehreren
   der Ansprüche 4 bis 6,

   d a d u r c h   g e k e n n z e i c h n e t ,

   daß der Sammelbehälter (15') mit einer vorzugsweise in
   dessen unteren Bereich angeordneten Preßvorrichtung (24)
   zur Paketierung des aufgesammelten Gutes versehen ist.

8. Schlegelmulchgerät nach Anspruch 7,

   d a d u r c h   g e k e n n z e i c h n e t ,

   daß die Preßvorrichtung (24) aus einem zum Befüllen mit
   dem Sammelbehälter (15') verbundenen mit einer Auslaßöffnung (26) versehenen Preßraum (25) und mit einem in
   diesen einführbaren, mittels einer Servoeinrichtung (3o)
   betätigbaren Schieber (29) gebildet ist.

./.

9. Schlegelmulchgerät nach Anspruch 8,

d a d u r c h   g e k e n n z e i c h n e t ,

daß die Auslaßöffnung des Preßraumes (25) durch eine
in Vorschubrichtung des Schiebers (29) gegen Federkraft
aufschwenkbare Klappe (27) verschlossen ist.

1o. Schlegelmulchgerät nach einem oder mehreren
der Ansprüche 1 bis 6,

d a d u r c h   g e k e n n z e i c h n e t ,

daß zum Pressen des in dem Sammelbehälter (15'') eingelegten Gutes ein an dem Förderschacht (12) oder dem Rahmen (2) abgestützter Schieber (34) vorgesehen ist, gegen
den der mit einer Einführöffnung für diesen ausgestattete Sammelbehälter (15'') durch Verschwenken um die horizontale Achse (19) preßbar ist.

11. Schlegelmulchgerät nach einem oder mehreren
der Ansprüche 1 bis 1o,

d a d u r c h   g e k e n n z e i c h n e t ,

daß der Förderschacht (12) mit einem Fördergebläse (14)
versehen ist.

12. Schlegelmulchgerät nach Anspruch 11,

d a d u r c h   g e k e n n z e i c h n e t ,

daß das Fördergebläse (14) in der Vorderwand des Förderschachtes (12) oberhalb der Messerwalze (5) eingesetzt
ist.

./.

13. Schlegelmulchgerät nach einem oder mehreren
    der Ansprüche 1 bis 1o,

    d a d u r c h   g e k e n n z e i c h n e t ,

    daß in dem Förderschacht (55) ein vorzugsweise sich
    über dessen Breite erstreckendes mit Förderelementen
    (6o) bestücktes antreibbares Förderband (57) od.dgl.
    angeordnet ist.

14. Schlegelmulchgerät nach Anspruch 13,

    d a d u r c h   g e k e n n z e i c h n e t ,

    daß das Förderband (55) trieblich mit der Messerwalze
    (52) verbunden ist.

15. Schlegelmulchgerät nach einem oder mehreren
    der Ansprüche 1 bis 14,

    d a d u r c h   g e k e n n z e i c h n e t ,

    daß in Fahrtrichtung (F) hinter der Messerwalze (5)
    zur Aufnahme liegengebliebenen Gutes vorzugsweise in
    Fahrtrichtung geneigt angeordnete und nachgiebig gehaltene, zwischen die Schlegelmesseer (6) eingreifende
    Zinken (3) vorgesehen sind.

16. Schlegelmulchgerät nach einem oder mehreren
    der Ansprüche 1 bis 15,

    d a d u r c h   g e k e n n z e i c h n e t ,

daß der Messerwalze (42) eine mit Aufnahmewerkzeugen bestückte antreibbare Aufnahmewalze (47) oder dgl. zugeordnet ist, zwischen deren Werkzeugen die Schlegelmesser der Messerwalze (42) zur Übernahme des aufgenommenen Gutes eingreifen.

17. Schlegelmulchgerät nach Anspruch 16,

d a d u r c h   g e k e n n z e i c h n e t ,

daß die Aufnahmewalze (47) unterhalb der Messerwalze (42) vorzugsweise gegenüber dieser nach vorn versetzt, angeordnet ist.

18. Schlegelmulchgerät nach Anspruch 16 oder 17,

d a d u r c h   g e k e n n z e i c h n e t ,

daß die Aufnahmewalze (47) und die Messerwalze (42) trieblich miteinander verbunden sind.

19. Schlegelmulchgerät nach einem oder mehreren der Ansprüche 1 bis 18,

d a d u r c h   g e k e n n z e i c h n e t ,

daß die Schlegelmesser (6) hakenförmig ausgebildet sind.

2o. Schlegelmulchgerät nach einem oder mehreren der Ansprüche 1 bis 19,

d a d u r c h   g e k e n n z e i c h n e t ,

daß die Abdeckung (11) nahezu bis zum Boden (A) herabgeführt ist.

A 4789 e-s
22. April 1981

## FIG. 1

FIG. 2

FIG. 3

FIG. 4

FIG. 5

Europäisches
Patentamt

**EUROPÄISCHER RECHERCHENBERICHT**

EP 82 10 2549.1

| Kategorie | Kennzeichnung des Dokuments mit Angabe, soweit erforderlich, der maßgeblichen Teile | betrifft Anspruch | |
|---|---|---|---|
| | **EINSCHLÄGIGE DOKUMENTE** | | **KLASSIFIKATION DER ANMELDUNG (Int. Cl 3)** |
| X,Y | DE − A − 1 582 164 (DEERE & CO.) <br> * Seite 5, letzter Absatz bis Seite 7, erster Absatz; Fig. 1, 2 * <br> −− | 1-5 | A 01 D 50/00 |
| Y | DE − U − 7 615 755 (MASCHINENFABRIK BER-MATINGEN GMBH) <br> * Fig. 1 * <br> −− | 2 | |
| Y | DE − A − 1 457 943 (C.H. CHRISTIANSEN) <br> * Ansprüche 1, 4, 13 bis 15, 21; Fig. 1, 7, 8 * <br> −− | 3-5 | **RECHERCHIERTE SACHGEBIETE (Int. Cl.3)** |
| Y | GB − A − 878 398 (LUNDELL LTD.) <br> * Seite 3, Zeilen 54 bis 98; Fig. 3, 4 * <br> −− | 3-5 | A 01 D 49/00 <br> A 01 D 50/00 |
| A | DE − C − 1 202 058 (VEB-KOMBINAT FORT-SCHRITT LANDMASCHINEN) <br> * Fig. 1 * <br> −− | 11,12 | |
| A | FR − A − 1 124 139 (P.H.J. SALES) <br> * Fig. 1, 2, 4 * <br> −− | 15 | |
| A | FR − A − 2 127 880 (A. VAUZELLE) <br> * ganzes Dokument * <br> −− | 16-19 | **KATEGORIE DER GENANNTEN DOKUMENTE** |
| A | DE − U − 1 933 364 (HOLANDA N.V. MACHINE-FABRIEK) <br> * Fig. 1 * <br> −−−− | | X: von besonderer Bedeutung allein betrachtet <br> Y: von besonderer Bedeutung in Verbindung mit einer anderen Veröffentlichung derselben Kategorie <br> A: technologischer Hintergrund <br> O: nichtschriftliche Offenbarung <br> P: Zwischenliteratur <br> T: der Erfindung zugrunde liegende Theorien oder Grundsätze <br> E: älteres Patentdokument, das jedoch erst am oder nach dem Anmeldedatum veröffentlicht worden ist <br> D· in der Anmeldung angeführtes Dokument <br> L. aus andern Grunden angeführtes Dokument |

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 11-06-1982 | SCHOFER |